# EUROPÄISCHE PATENTANMELDUNG

(11) **EP 0 708 258 A2**
(43) Veröffentlichungstag der Anmeldung: **24.04.1996**
(21) Anmeldenummer: 95116091.0
(22) Anmeldetag: 12.10.1995
(51) Int. Cl.: F16B 13/14, E21D 20/02, C08L 67/06, C08L 63/00

(54) **Dübelmasse für die chemische Befestigungstechnik**

(30) Priorität: 20.10.1994 DE 4437497
(71) Anmelder: BASF AKTIENGESELLSCHAFT, D-67056 Ludwigshafen (DE)
(72) Erfinder: Gerth, Dale, Dr., D-67346 Speyer (DE); Möbius, Karl-Heinz, Dr., D-69126 Heidelberg (DE)

(57) **Zusammenfassung**

Die Erfindung betrifft eine Dübelmasse zur chemischen Befestigung von Ankerstangen, Gewindehülsen und Schrauben in Bohrlöchern, enthaltend ein emissionsarmes Reaktionsharz und - räumlich getrennt davon angeordnet - ein Härtungsmittel für das Harz. Das Reaktionsharz enthält 10 bis 80 Gew.-% tert.-Butylstyrol als Comonomer.

## Beschreibung

Die Verwendung von Reaktivharzmassen auf der Basis von ungesättigten Polyesterharzen, Vinylesterharzen oder von Epoxidharzen als Bindemittel für die chemische Befestigungstechnik ist seit langem bekannt. Es handelt sich dabei um Zweikomponentensysteme, wobei eine Komponente das Reaktivharz und die andere Komponente den Härter enthält. Andere, übliche Bestandteile wie Füllmittel, Beschleuniger, Stabilisatoren, Lösungsmittel einschließlich Reaktivlösungsmittel (Comonomere) können in der einen und/oder der anderen Komponente enthalten sein. Durch Vermischen der beiden Komponenten wird dann durch Radikalbildung die Reaktion in Gang gebracht und das Harz zum Duromeren gehärtet.

Zur Befestigung von Ankerstangen in Bohrlöchern von Beton oder massivem Gestein werden im allgemeinen Patronen mit 2 Kammern zur Trennung der in der Patrone enthaltenen Komponenten verwendet (s. z.B. EP-A 199 671). Die Patrone wird in das Bohrloch eingesetzt, und durch schlagdrehendes Einbringen des Befestigungselementes in die Bohrlöcher werden die Patrone und die Kammern zerstört. Dabei werden die beiden Komponenten gemischt und die Reaktion wird initiiert. Die ausgehärtete Reaktionsharzmasse ist in der Lage, spreizdruckfrei die Lasteinleitung in den Untergrund zu ermöglichen. Vor allen Dingen für Schwerlastverankerungen haben sich derartige Verbundanker bewährt.

Besonders für Verankerungen in porösem oder Hohlräume enthaltendem Untergrund, z.B. in Schaumblocksteinen oder in Hohlziegelsteinen, aber auch in massivem Gestein, Ziegelsteinen und Beton, kann man mit Zweikammer-Kartuschen arbeiten (s. z.B. DE-A 36 17 702). Die beiden Komponenten der Dübelmasse werden gleichzeitig aus der Kartusche herausgepreßt, durch geeignete Vorrichtungen, z.B. Schnecken, vermischt und in das Bohrloch gedrückt. In diese Masse kann dann direkt ein Befestigungselement mit beliebig geformtem Querschnitt eingeführt werden, welches nach dem Aushärten des Harzes im Bohrloch verankert wird; oder man führt in das Bohrloch erst eine Innengewindehülse ein, die durch Aushärten des Harzes fixiert werden, und in die dann Schrauben bzw. Ankerstangen eingedreht werden können. Bei Hohlziegelsteinen wird in ein Bohrloch erst eine gitterförmige, zylindrische Hülse aus Kunststoff oder Metall eingesetzt. Dann wird Harz aus der Zweikammer-Kartusche eingepreßt. Durch Einführen einer Innengewindehülse wird Dübelmasse durch das Gitter der Siebhülse gedrückt, so daß sich nach dem Aushärten der Dübelmasse eine feste Verankerung ausbildet.

Bei Verankerungen hinter Rigips-Platten oder in Hohlkammersteinen wendet man Kartuschen mit schaumfähigen Klebemassen an, wie sie z.B. in EP-A 338 983 beschrieben sind. Die eine Komponente der Dübelmasse enthält ein anorganisches Carbonat, z.B. Kreide, die andere Komponente eine Säure, z.B. Polyacrylsäure oder Phosphorsäure. In ein Bohrloch wird eine Innengewindehülse oder eine Siebhülse eingesetzt, in welche die schaumfähige Dübelmasse eingedrückt wird. Beim Vermischen der Komponenten wird CO₂ freigesetzt, welches bewirkt, daß die Dübelmasse aufschäumt und die Hohlräume ausfüllt, bzw. hinter der Platte eine pilzförmige Verankerung bildet, in der nach dem Aushärten der Dübelmasse der Befestigungspunkt verankert ist.

Als Reaktivverdünner zur Einstellung der optimalen Harzviskosität wird üblicherweise Styrol verwendet. Reaktionsharze auf dieser Basis weisen eine hohe Härtungsgeschwindigkeit auf, das Comonomere Styrol führt jedoch zu Geruchsbelästigungen bei der Herstellung und der Applikation der Patronen und Kartuschen. Verankerungen auf Basis von styrolhaltigen ungesättigten Polyesterharzen weisen darüber hinaus eine unzureichende Hydrolysebeständigkeit auf. Schließlich ist in vielen Fällen auch die Hitzestandfestigkeit der Verankerungen im Brandfall nicht ausreichend.

Man hat verschiedentlich Styrol durch andere Comonomere, vorzugsweise durch hochsiedende Methacrylsäureester ersetzt. Entsprechende emissionsarme Reaktionsharze, insbesondere mit ungesättigten Polyestern, härten jedoch nicht vollständig aus, so daß Verankerungen auf dieser Basis eine zu geringe Auszugsfestigkeit ergeben.

Der Erfindung lag daher die Aufgabe zugrunde, ein Reaktionsharz für die chemische Befestigungstechnik bereit zustellen, welches emissionsarm ist und im ausgehärteten Zustand abgewogen gute mechanische Eigenschaften, insbesondere guten Formschluß an silikatischen Materialien aufweist, so daß auf dieser Basis Verankerungen mit hoher Auszugsfestigkeit, Hydrolysebeständigkeit und Hitzestandfestigkeit erzeugt werden können. Dabei sollte das Styrol durch ein emissionsarmes Comonomeres ersetzt werden, und das Harz sollte eine verhältnismäßig niedrige Viskosität aufweisen.

Es wurde nun gefunden, daß diese Aufgabe gelöst wird, wenn man als Comonomer tert.-Butylstyrol verwendet. Gegenstand der Erfindung ist demzufolge eine Dübelmasse zur chemischen Befestigung von Ankerstangen in Bohrlöchern, enthaltend
I. ein emissionsarmes, radikalisch härtbares Reaktionsharz und - räumlich getrennt davon angeordnet -
II. ein Härtungsmittel für das Harz,
wobei das Harz 10 bis 80 Gew.% tert.-Butylstyrol als Comonomer enthält.

Tert.-Butylstyrol wird in einigen Patentveröffentlichungen neben Styrol und anderen substituierten Styrolen in einer Liste von geeigneten Comonomeren für ungesättigte Polyesterharze aufgeführt. Es ist jedoch nirgends als geeignetes Comonomer für emissionsarme Harze differenziert oder beispielhaft beschrieben.

Als Reaktionsharze sind ungesättigte Polyester, Vinylester- und Vinylesterurethan-Harze und deren Mischungen geeignet.
1. Ungesättigte Polyester A sind die üblichen Kondensationsprodukte aus mehrwertigen, insbesondere zweiwertigen Carbonsäuren und deren veresterbaren Derivaten, insbesondere deren Anhydriden und mehrwertigen, insbesondere zweiwertigen Alkoholen, die gegebenenfalls zusätzlich Reste einwertiger Carbonsäuren, einwertiger Alkohole oder Reste von Hydroxycarbonsäuren enthalten, wobei zumindest ein Teil der Reste über ethylenisch ungesättigte copolymerisierbare Gruppen verfügen muß. Als mehrwertige, insbesondere zweiwertige, gegebenenfalls ungesättigte Alkohole eignen sich die üblichen insbesondere acyclische Gruppen, cyclische Gruppen als auch beide Arten von Gruppen aufweisende Alkandiole und Oxaalkandiole, wie z.B. Ethylenglykol, Propylenglykol-1,2, Propandiol-1,3, Butylenglykol-1,3, Butandiol-1,4, Hexandiol-1,6, 2,2-Dimethylpropandiol-1,3, Diethylenglykol, Triethylenglykol, Polyethylenglykol, Cyclohexandiol-1,2, 2,2-Bis-(p-hydroxycyclohexyl)-propan, Trimethylolpropanmonoallylether oder Butendiol-1,4. Bevorzugt sind Ethylenglykol, Propylenglykol, Dipropylenglykol und deren Mischungen.
   Ferner können ein-, drei- oder höherwertige Alkohole, wie z.B. Ethylhexanol, Fettalkohole, Benzylalkohole, 1,2-Di-(allyloxy)-propanol-3, Glycerin, Pentaerythrit oder Trimethylolpropan in untergeordneten Mengen mitverwendet werden. Die mehrwertigen, insbesondere zweiwertigen Alkohole werden im allgemeinen in stöchiometrischen oder annähernd stöchiometrischen Mengen mit mehrbasischen, insbesondere zweibasischen Carbonsäuren bzw. deren kondensierbaren Derivaten umgesetzt.
   Geeignete Carbonsäuren bzw. deren Derivate sind zweibasische olefinisch ungesättigte, vorzugsweise α,β-olefinisch ungesättigte Carbonsäuren, wie z.B. Maleinsäure, Fumarsäure, Chlormaleinsäure, Itaconsäure, Citraconsäure, Methylenglutarsäure und Mesaconsäure bzw. deren Ester oder vorzugsweise deren Anhydride. In die Polyester können weiterhin zusätzlich andere modifizierend wirkende zweibasische, ungesättigte und/oder gesättigte, sowie aromatische Carbonsäuren, wie z.B. Bernsteinsäure, Glutarsäure, α-Methylglutarsäure, Adipinsäure, Sebacinsäure, Pimelinsäure, Phthalsäureanhydrid, o-Phthalsäure, Isophthalsäure, Terephthalsäure, Dihydrophthalsäure, Tetrahydrophthalsäure, Tetrachlorphthalsäure, 3,6-Endomethylen-1,2,3,6-tetrahydrophthalsäure, Endomethylentetrachlorphthalsäure oder Hexachlorendomethylentetrahydrophthalsäure einkondensiert sein, ferner ein-, drei- und höherbasische Carbonsäuren, wie z.B. Ethylhexansäure, Fettsäuren, Methacrylsäure, Propionsäure, Benzoesäure, 1,2,4-Benzoltricarbonsäure oder 1,2,4,5-Benzoltetracarbonsäure. Vorzugsweise verwendet werden Maleinsäure bzw. deren Anhydrid, Fumarsäure und o-Phthalsäureanhydrid.
   Das Molverhältnis von ungesättigten zu gesättigten Dicarbonsäuren liegt vorzugsweise zwischen 1:0 und 1:2,5.
   Geeignet sind auch ungesättigte Polyester mit vorzugsweise endständigen Doppelbindungen.
   Die ungesättigten Polyester besitzen Säurezahlen von 0,5 bis 100, vorzugsweise von 2 bis 50 und mittlere Molekulargewichte von ungefähr 800 bis 6000, vorzugsweise von etwa 1000 bis 4000.
   Die ungesättigten Polyester werden im allgemeinen durch Schmelzkondensation oder Kondensation unter azeotropen Bedingungen bei Temperaturen zwischen 150 und 220°C aus ihren Ausgangskomponenten nach kontinuierlichen oder diskontinuierlichen Verfahren hergestellt.
   Ebenfalls geeignet sind ungesättigte Polyester, die mit Cyclopenten- oder Cyclohexengruppen modifiziert sind.
2. Ungesättigte Vinylesterharze (Epoxyacrylate) sind Additionsprodukte von Polyepoxiden mit ungesättigten Monocarbonsäuren, vorzugsweise Methacrylsäure. Diese Harze werden beispielsweise in den US-PS 3 066 112 und 3 179 623 beschrieben, wobei bevorzugt Vinylesterharze auf Basis von Bisphenol A zur Anwendung kommen. Sie zeichnen sich durch hohe Zähigkeit und gute Chemikalienbeständigkeit bei begrenzter Wärmeformbeständigkeit aus. Vinylesterharze aus Epoxy-Novolakharzen und (Meth-)Acrylsäure, wie sie beispielsweise in der US-PS 3 256 226 beschrieben werden, weisen dagegen höhere Wärmeformbeständigkeiten, aber geringere Zähigkeiten auf.
   Kennzeichnend für diese Klasse der Vinylesterharze ist die Gruppe 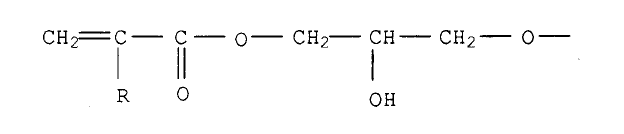 mit R=H oder CH₃.
   Eine andere Klasse von Vinylesterharzen sind Veresterungsprodukte von gegebenenfalls alkoxyliertem Bisphenol A mit (Meth)acrylsäure, z.B. nach EP-A 534 201.
3. Ungesättigte Vinylesterurethanharze (Urethanacrylate) weisen im allgemeinen folgende Gruppen auf:
   a) 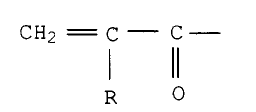 (mit R = H oder CH₃).
   b) 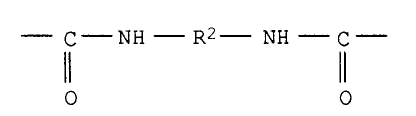 (mit R² = zweiwertiger aliphatischer, aromatischer oder cycloaliphatischer Rest mit 4 bis 40 C-Atomen, vorzugsweise ein aromatischer Rest mit 6 bis 20 C-Atomen), gegebenenfalls
   c)

      - O - R³ - O -

      (mit R⁴ = aliphatischer, cycloaliphatischer oder aromatischer Rest mit 2 bis 100 C-Atomen).

   Vorzugsweise ist das Vinylesterurethanharz ein Umsetzungsprodukt aus
   - einem polyfunktionellen Isocyanat,
   - gegebenenfalls einem mehrwertigen Alkohol,
   - gegebenenfalls einem mehrwertigen Amin,
   - einem Hydroxyalkyl-(meth)acrylat,
   wobei bei der Umsetzung das Gewichtsverhältnis Isocyanat: (Alkohol+Amin) zwischen 100:0 und 100:300 beträgt und das Ãquivalentverhältnis Hydroxyalkyl(meth)acrylat zu den freien Isocyanatgruppen des Umsetzungsproduktes zwischen 3:1 und 1:2 liegt.

Die Reaktionsharze enthalten erfindungsgemäß 10 bis 80, vorzugsweise 30 bis 60 Gew.-% tert.-Butylstyrol. Darunter sind p-tert.-Butylstyrol, m-tert.-Butylstyrol und deren Mischungen (vorzugsweise im Verhältnis 95 : 5) zu verstehen.

Das tert.-Butylstyrol kann auch im Gemisch mit anderen hochsiedenden Comonomeren eingesetzt werden, insbesondere mit (Meth-)Acrylsäureestern mit einem Siedepunkt oberhalb von 120, vorzugsweise oberhalb von 150°C. Es hat sich überraschenderweise gezeigt, daß Mischungen von ungesättigten Polyesterharzen mit (Meth)-Acrylsäureestern dann rasch und vollständig aushärten, wenn sie tert.-Butylstyrol zugemischt enthalten.

Bevorzugt sind Methacrylsäureester, wie z.B. 2-Ethylhexylmethacrylat, Phenylethylmethacrylat, Tetrahydrofurfurylmethacrylat, Ethyltriglykolmethacrylat, N,N-Dimethylaminoethylmethacrylat, N,N-Dimethylaminomethylmethacrylat, 1,4-Butandioldimethacrylat, Acetacarboxyalkylmethacrylat, 1,2-Ethandioldimethacrylat, Isobornylmethacrylat, Diethylenglykoldimethacrylat, Methoxypolyethylenglykolmonomethacrylat, Trimethylcyclohexylmethacrylat, Trimethylolpropantrimethacrylat, 2-Hydroxyethylmethacrylat, Hydroxypropylmethacrylat und Dicyclopentyloxyethylmethacrylat. Besonders bevorzugt ist Butandioldimethacrylat.

Acrylsäureester sind weniger bevorzugt, da sie meist hautreizend sind und eine geringe Hydrolysebeständigkeit ergeben.

Als verstärkende Füllstoffe für das Reaktionsharz dienen z.B. Quarz, Glas, Korund, Porzellan, Steingut, Schwerspat, Leichtspat, Gips Talkum und Kreide. Die Füllstoffe werden in Form von Sanden, Mehlen oder speziellen Formkörpern (Zylinder, Kugeln usw.) entweder der Harzlösung und/oder dem Härter (Initiator) zugemischt. Die Füllstoffe können als Fasern (fibrilläre Füllstoffe) eingesetzt werden. Bevorzugt und deutlicher verstärkend wirken sich die globulären, inerten Stoffe (Kugelform) aus.

Üblicherweise werden für die Peroxidhärtung Beschleuniger verwendet, welche zweckmäßigerweise räumlich zusammen mit dem Harz, d.h. getrennt vom Härter, angeordnet sind. Geeignete Beschleuniger sind: Aromatische Amine wie N,N-Dimethylanilin, N,N-Diethylanilin; Toluidine und Xylidine wie N,N-Di-isopropyliden-para-toluidin, N,N-Dimethyl-p-toluidin, N,N-Bis-(2-hydroxyethyl)- xylidin und -toluidin; ferner Co-, Mn-, Sn- oder Ce-Salze, wie z.B. Cobaltoctoat oder -naphthenat.

Das Reaktionsharz soll vorzugsweise eine Viskosität bei 23°C zwischen 100 und 10.000, insbesondere von 200 bis 2000 mPa·s aufweisen.

Räumlich getrennt vom Harz ist in der erfindungsgemäßen Dübelmasse das Härtungsmittel angeordnet. Bevorzugte Härtungsmittel sind lagerstabile organische Peroxide. Besonders gut geeignet sind Dibenzoylperoxid und Methylethylketonperoxid, ferner tert.-Butylperbenzoat, Cyclohexanonperoxid, Laurylperoxid und Cumolhydroperoxid, sowie tert.- Butylperoxy-2-ethylhexanoat.

Die Peroxide werden vorzugsweise in Mengen von 0,5 bis 10 Gew.%, insbesondere von 1 bis 5 Gew.%, bezogen auf das Reaktionsharz, eingesetzt.

Die Härtungsmittel werden zweckmäßigerweise durch inerte Füllstoffe phlegmatisiert aufgebracht, wobei Quarzsande bevorzugt sind.

In der Regel wird die Konfektionsform einer 2-Kammerpatrone gewählt. Als bewährte Ausführungsform haben sich Glaspatronen erwiesen, da das "Verpackungsmittel" Glas beim Mischprozeß fein zermahlen und dann als verstärkender Füllstoff in die Bindemittelmatrix integriert wird. Weiterhin können Mehrkammerpatronen aus keramischem Material eingesetzt werden, wie sie beispielsweise in DE-A 39 29 603.2 beschrieben sind.

Als Kartuschen werden vorzugsweise Zweikammerkartuschen verwendet, wobei die größere Kammer das Harz und die kleinere Kammer das Härtungsmittel enthält, jeweils zusammen mit Füllstoff. Im Fall schaumfähiger Klebemassen wird zweckmäßigerweise das Carbonat zum Harz gegeben, die Säure-Komponente kann entweder mit dem Härter zusammen in eine Kammer oder aber in eine separate Kammer gefüllt werden.

Außer Patronen und Kartuschen sind auch andere Applikationsarten für die erfindungsgemäßen Dübelharze möglich, z.B. eine Verpakkung in Kunststoffolien.

Die Harze mit den erfindungsgemäßen Comonomeren können ohne Geruchsbelästigung und besondere Vorkehrungen für die chemische Befestigungstechnik eingesetzt werden. Derartige Verankerungen weisen ein gutes Reißdehnungsverhalten, einen geringen Volumenschrumpf, gute Hydrolysebeständigkeit und Hitzestandfestigkeit sowie einen ausgezeichneten Formschluß an mineralischen Aufnahmewerkstoffen, wie Beton, Naturstein, sowie an Schaum- und Hohlblocksteinen auf. Die Harze zeichnen sich durch eine niedrige Viskosität aus.

### Beispiel

### Kondensation des Reaktionsharzes:

893 g (9,1 mol) Maleinsäureanhydrid, 809 g (*5,5* mol) Phthalsäureanhydrid, 1038 g (7,7 mol) Dipropylenglykol, 759 g (7,3 mol) und 0,250 g Hydrochinon (HCH) wurden in ein Reaktionsgefäß eingewogen, das mit einem Thermometer, einem ständig arbeitenden Rührwerk und einer Vorrichtung zum Einleiten eines Stickstoffstromes ausgestattet war. Die Mischung wurde langsam über 4 Stunden auf 200°C erhitzt und so lange dabei gehalten, bis die Säurezahl einer entnommenen Probe 35 mg KOH/kg betrug. Das Harz wurde auf 80°C abgekühlt. 0,250 g HCH und 1,75 kg (35 %) tert.-Butylstyrol wurden eingerührt und das Harz schnell auf RT abgekühlt. Das Harz besitzt eine Viskosität von ca 1000 mPas.

### Formulieren der Dübelmasse:

3 g obigen Reaktionsharzes wurden mit 0,07 g Diisopropanol-p-toluidin vorbeschleunigt. Durch Zugabe von tert. Butylbrenzkatechin wurde eine Gelierzeit von 3 Min. bei 25°C eingestellt. Anschließend wurden 7 g Quarzsand (Korngröße 0,04 bis 1 mm) eingemischt und die Masse in eine Kammer einer Zweikammerpatrone eingefüllt. Die zweite Kammer wurde mit 0,6 g Dibenzoylperoxid (20 %ig mit Gips phlegmatisiert) befüllt und die Patrone verschlossen.

### Anwendung der Dübelmasse:

Die Patrone wurde in ein Bohrloch (Tiefe 110 mm, Durchmesser 14 mm) in einem Betonblock (Beton B 25) eingesetzt. Mittels eines Bohrhammers wurde in die Patrone eine Ankerstange (Gewinde M12, Länge 150 mm) eingetrieben und das Harz ausgehärtet.

Nach einer Aushärtezeit von 60 Min. bei Raumtemperatur wurden die Lastwerte der Verankerung in einem Ausziehversuch ermittelt. Dabei wurde jeweils Stahlversagen (Bruch der Ankerstange) beobachtet. Die ermittelten Lastwerte betrugen im Mittel 50 kN mit einer geringen Streubreite.

## Patentansprüche

1. Dübelmasse zur chemischen Befestigung von Ankerstangen, Gewindehülsen und Schrauben in Bohrlöchern, enthaltend
I. ein emissionsarmes, radikalisch härtbares Reaktionsharz und
II. - räumlich getrennt davon angeordnet - ein Härtungsmittel für das Harz,
dadurch gekennzeichnet, daß das Harz 10 bis 80 Gew.% tert.-Butylstyrol als Comonomer enthält.

2. Dübelmasse nach Anspruch 1, dadurch gekennzeichnet, daß das Reaktionsharz mindestens 20 Gew.-% eines ungesättigten Polyesters, Vinylester- oder Vinylesterurethan-Harzes enthält.

3. Dübelmasse nach Anspruch 2, dadurch gekennzeichnet, daß das Harz als Comonomere
10 bis 70 Gew.-% tert.-Butylstyrol und
10 bis 70 Gew.-% eines (Meth-)Acrylsäureesters mit einem Siedepunkt oberhalb 120°C
enthält.

4. Dübelmasse nach Anspruch 1, dadurch gekennzeichnet, daß das Harz einen Beschleuniger für das Härtungsmittel enthält, vorzugsweise Cobaltoctoat oder ein tertiäres organisches Amin.

5. Dübelmasse nach Anspruch 1, dadurch gekennzeichnet, daß das Harz eine Viskosität bei 23°C zwischen 100 und 10 000 [mPa·s] aufweist.

6. Dübelmasse nach Anspruch 1, dadurch gekennzeichnet, daß das Härtungsmittel ein organisches Peroxid ist, welches in Mengen von 0,5 bis 10 Gew.-%, bezogen auf das Harz, eingesetzt wird.

7. Patrone oder Kartusche, enthaltend eine Dübelmasse nach Anspruch 1, dadurch gekennzeichnet, daß sie zwei oder mehrere voneinander getrennte Kammern umfassen, in welchen das Harz bzw. das Härtungsmittel angeordnet sind.
